# EUROPÄISCHE PATENTSCHRIFT

(11) **EP 1 129 142 B1**
(45) Veröffentlichungstag und Bekanntmachung des Hinweises auf die Patenterteilung: **12.03.2003**
(21) Anmeldenummer: 99947406.7
(22) Anmeldetag: 22.09.1999
(51) Int. Cl.: C09C 1/00, C01G 39/00, C01G 31/00

(54) **ROTSTICHIGE BISMUTHVANADAT-PIGMENTE**
RED-TINGED BISMUTH VANADATE PIGMENTS
PIGMENTS A BASE DE VANADATE DE BISMUTH A NUANCE TIRANT SUR LE ROUGE

(30) Priorität: 01.10.1998 CH 199398
(43) Veröffentlichungstag der Anmeldung: 05.09.2001
(73) Patentinhaber: Ciba Specialty Chemicals Holding Inc., 4057 Basel (CH)
(72) Erfinder: ERKENS, Leonardus, Johannes, Hubertus, NL-6213 CK Maastricht (NL); SCHMITT, Gregor, NL-6372 NE Landgraaf (NL); HAMERS, Hendrikus, Maria, Anna, D-52538 Selfkant (DE); LUIJTEN, Johannes, Maria, Martinus, NL-6351 CL Bocholtz (NL); MAINS, Jozef, Gertruda, Emanuel, NL-6118 BV Nieuwstadt (NL); SCHULPEN-VLEUGELS, Helena, Francisca, Maria, NL-6143 AN Guttecoven (NL)
(86) Internationale Anmeldenummer: EP9907050
(87) Internationale Veröffentlichungsnummer: WO00020515

(56) Entgegenhaltungen:
- EP-A- 0 492 244
- EP-A- 0 810 269
- US-A- 5 186 748
- DATABASE WPI Section Ch, Week 199346 Derwent Publications Ltd., London, GB; Class A60, AN 1993-365426 XP002128850 & JP 05 271568 A (DAINICHISEIKA COLOR & CHEM MFG), 19. Oktober 1993 (1993-10-19) & DATABASE REGISTRY [Online] Chemical Abstract service REGISTRY N° 153746-70-4 (Bi.O.V.Zr),

## Beschreibung

Die vorliegende Erfindung betrifft rotstichige Bismuthvanadat-Pigmente, ein Verfahren zu ihrer Herstellung sowie ihre Verwendung zum Pigmentieren von hochmolekularen organischen Materialien wie Lacken, Kunststoffen und Druckfarben.

Es besteht ein grosses Bedürfnis die klassischen schwermetallhaltigen Gelbpigmente wie Bleichromat und Cadmiumsulfid, durch toxikologisch unbedenkliche Pigmente zu ersetzen.

Bismuthvanadat-Pigmente stellen eine neue Klasse von toxikologisch unbedenklichen Gelbpigmenten dar. Bisher sind allerdings nur grünstichige Bismuthvanadat-Pigmente von grösserem industriellem Interesse, da die rotstichigen Pigmente meist zu trüb und farbschwach sind. Rotstichige Bismuthvanadat-Pigmente mit guten anwendungstechnischen Eigenschaften sind in DE-A 19,529,837 und EP-A 839,874 beschrieben. Bei Ersteren handelt es sich um eisenhaltige Bismuthvanadat-Pigmente, deren Farbraum, basierend auf dem L*C**h*-System der Commission Internationale de l'Eclairage, jedoch auf Helligkeitswerte von L* von < 78 sowie Farbwinkel Hue, *h*, von 78 bis 85 sowie Chroma-Werten C* von ≥ 85 limitiert ist.

In EP-A 839,874 werden Bismuthvanadat-Pigmente beschrieben, die zusätzlich noch Phosphat enthalten können, und ebenfalls nur niedrige Helligkeitswerte von <75 besitzen.

Zu den toxikologisch unbedenklichen Elementen gehört beispielsweise Zirkonium. Bismuthvanadat-Pigmente, die Zirkonium enthalten, sind beispielsweise aus US 5,399,197 bekannt. Allerdings handelt es sich hier, um grünstichig gelbe Bismuthvanadat-Pigmente.

In EP-B 492,244 werden zwar grün- und rotstichig gelbe Zirkonium enthaltende Bismuthvanadat-Pigmente genannt, in den Ausführungsbeispielen sind allerdings nur grünstichig gelbe Pigmente beschrieben. Ferner entnimmt der Fachmann aus Beispiel 6, dass bei einem Zirkoniumanteil von 0,05 Teilen, bezogen auf 1 Teil Bismuth, nur ein sehr blassgelbes Pigment erhalten werden kann.

Des weiteren toxikologisch unbedenklich ist der Einbau von Molybdaten wie Calciummolybdat in die Bismuthvanadat-Pigmente. In EP-A239,526 werden Molybdän-haltige Bismuthvanadat-Pigmente beschrieben, die allerdings auch nur grünstichig gelb sind.

Für Einzel- und insbesondere für Kombinationseinfärbungen besteht das Bedürfnis, den Farbraum mit weiteren Bismuthvanadat-Pigmenten zu vergrössern. Insbesondere sind Pigmente erwünscht, die ohne Einbussen in der Farbstärke grössere Farbwinkel und Helligkeitswerte als die bereits bekannten rotstichigen Bismuthvanadat-Pigmente aufweisen.

Die Aufgabe der vorliegenden Erfindung bestand deshalb in der Bereitstellung weiterer rotstichiger Bismuthvanadat-Pigmente, die toxikologisch unbedenklich sind, den bisher zugänglichen Farbraum bzw. -winkel erweitern und verbesserte koloristische und anwendungstechnische Eigenschaften besitzen.

Demgemäss betrifft die Erfindung Zirkonium enthaltende, rotstichige Bismuthvanadat-Pigmente der Formel I,

BiV_{b}Oₓ•Ca_{c}(MoO₄)_{d}•ZrₑSi_{f}O_{y}•F_{z} I

in der die Variablen die folgende Bedeutung haben:
- b: 0,8 bis 1,5; bevorzugt 1,1 bis 1,5 und ganz besonders bevorzugt 1,25 bis 1,5
- c: 0 bis 0,3;
- d: 0 bis 0,3;
- e: 0,01 bis 0,3;
- f: 0 bis 0.3;
- x: (3/2 + 5b/2);
- y: (2e + 2 f);
- z: 0.05 bis 1.0; besonders bevorzugt 0,05 bis 0,7 und ganz besonders bevorzugt 0,3 bis 0,5.
Vorzugsweise besitzen die erfindungsgemässen rotstichigen Bismuthvanadat-Pigmente der Formel I Helligkeitswerte L* im Bereich von 79 bis 91, bevorzugt von 81 bis 87 oder/und Farbtonwinkel *h* von 82 bis 91, bevorzugt von 84 bis 89.

Besonders bevorzugt sind Zirkonium enthaltende, rotstichige Bismuthvanadat-Pigmente der Formel I, in der die Variablen die folgende Bedeutung haben:
- b: 0,8 bis 1,5; bevorzugt 1,1 bis 1,5 und ganz besonders bevorzugt 1,25 bis 1,5
- c: 0 bis 0,3;
- d: 0 bis 0,3;
- e: 0,01 bis 0,3;
- f: 0
- x: (3/2 + 5b/2);
- y: (2e + 2 f);
- z: 0.05 bis 1.0; besonders bevorzugt 0,05 bis 0,7 und ganz besonders bevorzugt 0,3 bis 0,5
sowie
rotstichige Bismuthvanadat-Pigmente der Formel I, in der die Variablen die folgende Bedeutung haben:
- b: 0,8 bis 1,5; bevorzugt 1,1 bis 1,5 und ganz besonders bevorzugt 1,25 bis 1,5
- c: 0,01 bis 0,3;
- d: 0,01 bis 0,3;
- e: 0,01 bis 0,3;
- f: 0,01 bis 0,3;
- x: (3/2 + 5b/2);
- y: (2e + 2 f);
- z: 0.05 bis 1.0; besonders bevorzugt 0,05 bis 0,7 und ganz besonders bevorzugt 0,3 bis 0,5.

Des weiteren besonders bevorzugt sind Zirkonium enthaltende, rotstichige Bismuthvanadat-Pigmente der allgemeinen Formel I, in der die Variablen die folgende Bedeutung haben:
- b: 0,8 bis 1,5; bevorzugt 1,1 bis 1,5 und ganz besonders bevorzugt 1,25 bis 1,5
- c: 0;
- d: 0;
- e: 0,01 bis 0,3;
- f: 0 bis 0,3;
- x: (3/2 + 5b/2);
- y: (2e + 2 f);
- z: 0.05 bis 1.0; besonders bevorzugt 0,05 bis 0,7 und ganz besonders bevorzugt 0,3 bis 0,5.

Ferner besonders bevorzugt sind Zirkonium enthaltende, rotstichige Bismuthvanadat-Pigmente der Formel I, in der die Variablen die folgende Bedeutung haben:
- b: 0,8 bis 1,5; bevorzugt 1,1 bis 1,5 und ganz besonders bevorzugt 1,25 bis 1,5
- c: 0;
- d: 0;
- e: 0,01 bis 0,3;
- f: 0;
- x: (3/2 + 5b/2);
- y: (2e + 2 f);
- z: 0.05 bis 1.0; besonders bevorzugt 0,05 bis 0,7 und ganz besonders bevorzugt 0,3 bis 0,5.

Die erfindungsgemässen Pigmente der Formeln I können feste Lösungen ("solid solution") sein, die entsprechend ihrer chemischen Zusammensetzung verschiedene Kristallmodifikationen aufweisen.

Die vorliegende Erfindung betrifft des weiteren ein Verfahren zur Herstellung der erfindungsgemässen Pigmente der Formel I gemäß Anspruch 7.

In der Regel spielt es keine Rolle in welcher Reihenfolge man die Salze miteinander mischt.

Eine bevorzugte Ausführungsform der vorliegenden Erfindung betrifft ein Verfahren zur Herstellung der erfindungsgemässen Pigmente der Formel I, indem man
(a1) eine Lösung eines Bismuth-, eines Zirkonium- und eines Calcium-Salzes, mit einer Lösung eines Vanadat-, eines Molybdat- und eines Silikat-Salzes,
   oder
(a2) eine Lösung eines Bismuth-, eines Zirkonium- und eines Calcium-Salzes, mit einer Lösung eines Vanadat- und eines Molybdat-Salzes,
   oder
(a3) eine Lösung eines Bismuth- und eines Zirkonium-Salzes mit einer Lösung eines Vanadat- und eines Silikat-Salzes,
   oder
(a4) eine Lösung eines Bismuth- und eines Zirkonium-Salzes mit einer Lösung eines Vanadat-Salzes mischt,
   und
(b) die so erhaltene Mischung anschliessend während 2 bis 30 Stunden bei einem pH-Bereich von 4,5 bis 8 hält.

Üblicherweise werden in den Verfahrensschritten (a1), (a2), (a3) oder (a4) die benötigten Ausgangsstoffe als Lösungen in der Form ihrer Ionen vermischt. Die ausgefallenen Partikel zeigen in der Regel keine Pigmenteigenschaften, sondern sind im allgemeinen röntgenamorph und oft gelartig.

Im Verfahrensschritt (b) werden die in der Regel amorph ausgefällten Partikel kristallisiert . Es ist zweckmässig, die nach den Verfahrensschritten (a1), (a2), (a3) oder (a4) erhaltenen Partikel nicht durch beispielsweise Filtration und Waschen zu isolieren, sondern direkt zu kristallisieren.

Die Verfahrensschritte (a1), (a2), (a3) oder (a4) erfolgen vorzugsweise durch Vermischen einer Bismuth-Salz-Lösung, enthaltend gewünschtenfalls ein Calcium- und Zirkonium-Salz oder nur ein Zirkonium-Salz, mit einer Vanadat-Lösung enthaltend gewünschtenfalls ein Molybdat und Silikat oder nur ein Silikat.

Die Verfahrensschritte (a1), (a2), (a3) oder (a4) können in einer weiteren Ausführungsform des erfindungsgemässen Verfahrens, aber auch durch gleichzeitiges oder aufeinander folgendes Vermischen der einzelnen Salz-Lösungen miteinander erfolgen.

Ferner betrifft eine weitere Ausführungsform des vorliegenden Verfahrens die Verfahrensschritte (a1), (a2), (a3) oder (a4), indem man die Bismuth-Salz- und die Vanadat-Lösung parallel dosiert.

In der Regel rührt man während oder nach der parallelen Zudosierung, insbesondere während der Dosierung.

In der Verfahrensstufe (b) wird die in den Verfahrensstufen (a1) bis (a4) erhaltene Mischung durch Zugabe einer Base, insbesondere einer anorganischen Base auf einen pH-Bereich von pH 4 bis 8,5, vorzugsweise von 5 bis 8, eingestellt.

In einer Variante der Verfahrensstufe (b) kann der pH auch stufenweise eingestellt werden. Beispielsweise während 60 Minuten auf einen pH im Bereich von 2 bis 4,5, insbesondere von 3 bis 4, und anschliessend in einen pH-Bereich von pH 4 bis 8,5, vorzugsweise von 5 bis 8.

Dabei erweist sich gegebenenfalls ein Erhitzen, insbesondere ein stufenweises Erhitzen, der Mischung, beispielsweise auf 50 bis 110°C, zweckmässig auf 80 bis 100°C, während oder nach der pH-Erhöhung als vorteilhaft.

In der Regel wird die Bismuth-, Calcium- und Zirkonium-haltige Salz-Lösung oder Bismuthund Zirkonium-haltige Salz-Lösung vorgelegt, und die Vanadat-, Molybdat- und Silikathaltige Lösung, oder Vanadat- und Molybdat-haltige Lösung oder Vanadat- und Silikathaltige Lösung oder Vanadat-haltige Lösung zugefügt.

Das Vermischen der verschiedenen Reaktionslösungen der Verfahrensschritte (a1), (a2), (a3) oder (a4) kann portionsweise oder kontinuierlich durch gleichzeitige Zuführung als auch diskontinuierlich durch Vorlage der einen und Zudosieren der anderen Lösung(en) erfolgen. Bevorzugt erfolgt die Vermischung der Lösungen unter Rühren, gegebenenfalls unter erhöhtem Druck, oder in einer mit einem Hochleistungsrührer versehenen Vorrichtung.

Das Aufheizen kann zum Beispiel durch elektrische Aussenheizung des Reaktionskessels oder durch direkte Zufuhr von Wasserdampf in den Reaktionskessel erfolgen.

In einer besonderen Ausführungsform des erfindungsgemässen Verfahrens kann man gewünschtenfalls in der Verfahrensstufe (b) mit der ein- bis dreifachen Menge Wasser, bezogen auf die Gesamtmenge der aus der Verfahrensstufe (a1), (a2), (a3) oder (a4) erhaltenen Mischung, verdünnen.

Die Gesamtzeit für die Verfahrensstufe (b) kann je nach Ansatzgrösse variieren. Im allgemeinen sind 2 bis 30 Stunden und bevorzugt für 5 bis 25 Stunden ausreichend.

Falls c>0 ist, liegt das Molverhältnis von Bismuth-Salz zu Calcium-Salz in der Regel im Bereich von 1: 0,001 bis 1:0,5, bevorzugt im Bereich von 1: 0,001 bis 1:0,3 und ganz besonders bevorzugt im Bereich von 1 : 0,01 bis 1: 0,1.

Das Molverhältnis von Bismuth-Salz zu Zirkonium-Salz liegt in der Regel im Bereich von 1: 0,01 bis 1:0,5, bevorzugt im Bereich von 1: 0,01 bis 1:0,3 und ganz besonders bevorzugt im Bereich von 0,01 bis 1: 0,2.

Das Molverhältnis von zur Reaktion eingesetztem Bismuth-Salz zum Vanadium-Salz liegt in der Regel im Bereich von 1: 0,8 bis 1:3, bevorzugt im Bereich von 1: 0,8 bis 1:2 und ganz besonders bevorzugt im Bereich von 1: 0,8 bis 1:1,5.

Falls d>0 ist, liegt das Molverhältnis von Bismuth-Salz zu Molybdän-Salz in der Regel im Bereich von 1: 0,001 bis 1:0,5, bevorzugt im Bereich von 1:0,001 bis 1:0,3 und ganz besonders bevorzugt im Bereich von 1: 0,01 bis 1:0,1.

Falls f>0 ist, liegt das Molverhältnis von Bismuth-Salz zu Silikat in der Regel im Bereich von 1: 0,001 bis 1:0,5, bevorzugt im Bereich von 1: 0,001 bis 1: 0,3 und ganz besonders bevorzugt im Bereich von 1: 0,01 bis 1: 0,2.

Die oberen Konzentrationsgrenzen der oben aufgeführten Salzlösungen werden im allgemeinen durch die Löslichkeit der eingesetzten Salze bestimmt, wobei aber der Einsatz verdünnter Lösungen insbesondere zur besseren stöchiometrischen Kontrolle während des Mischvorgangs der erfindungsgemäss in Betracht gezogenen Lösungen vorteilhaft ist. Die Konzentrationen der Salzlösungen liegen üblicherweise im Bereich von 0,001 bis 50 Gew.-%, und bevorzugt im Bereich von 0,01 bis 30 Gew.-%.

Die Lösungen werden zweckmässig im Temperaturbereich von 10 bis 100°C, vorzugsweise von 20 bis 70°C gemischt.

Als Bismuth-Salz setzt man in der Regel Bismuthacetat oder Bismuthnitrat ein, bevorzugt Bismuth-III-Nitrat.

In einer besonderen Ausführungsform lassen sich Bismuth-III-Salzlösungen beispielsweise durch Lösen von Bismuthnitrat, zum Beispiel Bi(NO₃)₃•5H₂O, in beispielsweise 1,0 bis 4,0 N Salpetersäure oder in Essigsäure herstellen.

Calcium-Salzlösungen lassen sich beispielsweise durch Lösen von Ca(NO₃)₂•4H₂O, in beispielsweise Wasser oder in 1,0 bis 4,0 N Salpetersäure oder in Essigsäure herstellen.

Vanadat-Lösungen lassen sich beispielsweise aus Alkalimetallvanadat wie Natrium-, Lithium- oder Kaliumvanadat, zum Beispiel meta-Vanadat, NaVO₃, oder ortho-Vanadat, Na₃VO₄, oder Alkalimetall-polyvanadate oder aus Vanadiumpentoxid durch Auflösen in basischer Lösung herstellen.

Als Molybdat oder Silikat verwendet man beispielsweise die entsprechenden Natrium-, Kalium-, Lithium- oder Ammoniumsalze, oder man löst die entsprechenden Oxide in basischer Lösung auf.

Im Fall der Silikat-Lösung verwendet man in der Regel Natrium- oder Kalium-Wasserglaslösungen, insbesondere Natrium-Wasserglaslösungen.

Die sauren Lösungen besitzen zweckmässig einen pH-Wert im Bereich von 0 und 6, bevorzugt von 0 bis 3. Die basischen Lösungen besitzen üblicherweise einen pH-Wert im Bereich von 9 bis 14, bevorzugt zwischen 11 und 14.

Eine weitere Ausführungsform des vorliegenden Verfahrens betrifft die Verfahrensschritte (a1), (a2), (a3) oder (a4), indem man zunächst die Lösung eines Calcium- oder Zirkonium-Salzes oder eines Gemisches davon gegebenenfalls mit der Lösung eines Molybdats oder Silikats oder eines Gemisches davon herstellt und mit den Lösungen eines Bismuth-Salzes und eines Vanadats vermischt.

Die Lösungen des Calcium- oder Zirkonium-Salzes oder eines Gemisches davon mit gegebenenfalls der Lösung eines Molybdats oder Silikats oder eines Gemisches davon können gewünschtenfalls gealtert werden.

Die Alterungstemperatur liegt in der Regel im Bereich von 0 bis 80 °C, insbesondere bei 10 bis 30°C.

Das Vermischen der Lösungen des Calcium- oder Zirkonium-Salzes oder Molybdats oder Silikats oder Gemischen kann portionsweise zunächst mit der Lösung eines Bismuth-Salzes und anschliessend mit der eines Vanadats erfolgen oder umgekehrt zunächst mit der Lösung eines Vanadats und anschliessend der eines Bismuth-Salzes oder gleichzeitig mit einer Lösung aus Bismuth-Salz und Vanadat.

Die Vermischung der Salze erfolgt in der Regel im Temperaturbereich von 0 bis 100°C, bevorzugt im Bereich von 10 bis 30°C.

Der pH-Bereich nach dem Vermischen der einzelnen Salzlösungen beträgt vorzugsweise 0 bis 7 und besonders bevorzugt 0 bis 3.

Geeignete anorganische Basen sind beispielsweise Alkalimetallhydroxide wie Natrium-, Kalium- oder Lithiumhydroxid, bevorzugt in Form einer wässerigen Lösung mit beispielsweise einem Gehalt in den Bereichen von 40 bis 60 Gew.-%, 20 bis 40 Gew.-%, 10 bis 30 Gew.-% oder 5 bis 15 Gew.-%.

Des weiteren betrifft die vorliegende Erfindung eine bevorzugte Ausführungsform des Verfahrens zur Herstellung der erfindungsgemässen Pigmente der Formel I, indem man
(a1) eine Lösung, enthaltend ein Bismuth-, ein Zirkonium- und ein Calcium-Salz, mit einer Lösung, enthaltend ein Vanadat-, ein Molybdat- und ein Silikat-Salz,
   oder
(a2) eine Lösung, enthaltend ein Bismuth-, ein Zirkonium- und ein Calcium-Salz, mit einer Lösung, enthaltend ein Vanadat- und ein Molybdat-Salz,
   oder
(a3) eine Lösung, enthaltend ein Bismuth- und ein Zirkonium-Salz mit einer Lösung, enthaltend ein Vanadat- und ein Silikat-Salz,
   oder
(a4) eine Lösung, enthaltend ein Bismuth- und ein Zirkonium-Salz mit einer Lösung eines Vanadat-Salzes vermischt,
   und
(b) die so erhaltene Mischung anschliessend während 2 bis 30 Stunden bei einem pH-Bereich von 4,5 bis 8 behandelt,
   wobei man
(c) in den Stufen (a1), (a2), (a3) oder (a4) und/oder (b) Fluoridionen zusetzt.

Fluoridionen kann man beispielsweise als separate wässerige Lösung einsetzen, die man mit der Bismuth-Salz- und Vanadat-Lösung in den Verfahrensstufen (a1), (a2), (a3) oder (a4), mischt. Es ist auch möglich Fluoridionen mit der Bismuth-Salz- oder der Vanadat-Lösung zu vermischen, und letztere beiden Lösungen durch Mischen miteinander zu vereinigen. Bevorzugt sind Fluorid-haltige Vanadat-Lösungen. Eine weitere Möglichkeit besteht darin, dass sowohl die Bismuth-Salz-Lösung als auch die Vanadat-Salz-Lösung Fluoridionen enthalten.

Ferner ist es nach dem erfindungsgemässen Verfahren auch möglich, die Fluoridionen direkt vor oder in der Verfahrensstufe (b) beizumischen. Dabei kann man so verfahren, dass man die Mischung, hergestellt gemäss der Verfahrensstufe (a1), (a2), (a3) oder (a4), zu den Fluoridionen gibt oder umgekehrt, die Fluoridionen zu dieser Mischung. Im erfindungsgemässen Verfahren ist es auch möglich, die Zugabe der Fluoridionen über die Verfahrensstufen (a1), (a2), (a3) oder (a4), und (b) aufzuteilen.

Erfindungsgemäss bevorzugt werden die Fluoridionen in der Verfahrensstufe (b) zugefügt.

Die Menge der Fluoridionen kann variieren. Zweckmässig werden zwischen 0,01 und 3 Mol eines Fluoridsalzes, bezogen auf 1 Mol Bismuth, verwendet, bevorzugt aber zwischen 0,8 und 2,0 Mol und ganz besonders bevorzugt zwischen 1 Mol und 1,5 Mol Fluoridsalz.

Geeignete Fluoridsalze sind zum Beispiel Alkalimetall-, Erdalkalimetall- und Ammoniumfluoride wie Natriumfluorid, Kaliumfluorid, Ammoniumfluorid, insbesondere Natriumfluorid und Kaliumfluorid, die zweckmässig als wässrige Lösungen eingesetzt werden.

In einer weiteren Bevorzugung des erfindungsgemässen Verfahrens stellt man die erfindungsgemässen Pigmente der Formel I her, indem man in den Verfahrensstufen (b) mit der ein- bis dreifachen Menge Wasser verdünnt.

Die Verdünnung wird in der Regel durch Vermischen der Mischung, hergestellt gemäss der Verfahrensstufe (a1), (a2), (a3) oder (a4), mit einer wässrigen Fluorid-haltigen Lösung durchgeführt. Das Vermischen erfolgt nach allgemein bekannten Methoden des Vermischens durch Zugabe der wässrigen Fluorid-Lösung zur Mischung enthaltend die Bismuth-/Vanadat-Salze oder umkehrt durch Zugabe der Bismuth-/Vanadat-Salze zur wässerigen Fluorid-Lösung.

Man kann die Verdünnung mit wässriger Fluorid-Lösung im Temperaturbereich von 10 bis 110°C, insbesondere im Bereich von 50 bis 110°C und ganz besonders bevorzugt von 80 bis 100°C durchführen.

Die vorliegende Erfindung betrifft des weiteren auch Bismuthvanadat-Pigmente der Formel (I) erhältlich nach den erfindungsgemässen Verfahren.

Zur Aufarbeitung der erfindungsgemäss erhaltenen Verbindungen erhöht man in der Regel den pH-Wert in den Bereich von 8 bis 12, bevorzugt 8 bis 10.

Bevorzugt rührt man noch 5 bis 30 Minuten nach.

Die Temperatur während der pH-Einstellung und dem anschliessenden Nachrühren liegt üblicherweise im Bereich von 10 bis 110°C, bevorzugt im Bereich von 10 bis 100°C. Im erfindungsgemässen Verfahren ist es auch möglich die Temperatur während des pH-Einstellens und des Nachrührens zu ändern. Man kann beispielsweise während des Nachrührens auf eine Temperatur im Bereich von 10 bis 100°C, bevorzugt 10 bis 80°C abkühlen.

Die Isolierung wird in der Regel auf übliche Art, beispielsweise durch Abfiltrieren, Auswaschen des Filterkuchens mit Wasser zur Entfernung löslicher Salze, Trocknen und Pulverisieren, durchgeführt.

Die Trocknung erfolgt im allgemeinen bei einer Temperatur im Bereich von 90 bis 750°C und bevorzugt von 110 bis 500°C.

Bevorzugt trocknet man im Bereich von einer Stunde bis 48 Stunden und besonders bevorzugt im Bereich von 5 bis 20 Stunden.

Geeignete Trocknungsapparaturen wie Trockenschränke, Schaufeltrockner, Sprühtrockner sowie Vakuumtrockner sind dem Fachmann allgemein bekannt.

In der Regel desagglomeriert und mahlt man das Pigment nach der Trocknung nach dem Fachmann bekannten Methoden wie durch Sieben oder Zentrifugieren.

Zur Verbesserung der Pigmenteigenschaften wie der Stabilität gegenüber Wärme, Licht und chemischen Reaktionen, ist es vorteilhaft, auf die Oberfläche der erfindungsgemäss erhaltenen Verbindungen während ihrer Herstellung oder bevorzugt anschliessend an die oben beschriebenen Verfahrensstufen durch Behandlung nach bekannten, beispielsweise in US 3,370,971, US 3,639,133, US 4,046,588 und US 5,123,965 beschriebenen Verfahren, ein anorganisches oder organisches Beschichtungsmaterial aufzubringen. Die Behandlung kann ein- oder mehrstufig erfolgen. Zu diesem Zweck werden die Bismuthvanadat-Pigmente, zum Beispiel mit anorganischen Substanzen, beispielsweise Aluminium-, Eisen-, Chrom-, Magnesium-, Titan-, Antimon-, Cer-, Zirkonium-, Zink- oder Siliziumverbindungen, oder Gemischen davon wie insbesondere Zink/Aluminium-Gemischen, behandelt.

Als Beschichtungsmaterialien eignen sich üblicherweise anorganische Substanzen wie

Phosphate und Pyrophosphate von Zink, Aluminium, Calcium, Magnesium, Bismuth, Eisen oder Chrom, wie Zinkphosphat [Zn₃(PO₄)₂], Aluminiumphosphat [AlPO₄], Calciumphosphat [Ca₃(PO₄)₂], Calciumpyrophosphat [Ca₂P₂O₇], Magnesiumphosphat [Mg₃(PO₄)₂], Bismuthphosphat [BiPO₄], Eisen(II)-phosphat [Fe₃(PO₄)₂], Eisen(III)-phosphat [FePO₄], Chrom(III)-phosphat [CrPO₄] sowie Calcium-Salze von Oligophosphaten wie das Calcium-Salz des Graham'schen Salzes, oder eine Mischung von Phosphaten;

Hydroxide, wie Aluminiumhydroxid [Al(OH)₃], Zinkhydroxid [Zn(OH)₂], Eisen(II)-hydroxid [Fe(OH)₂], Eisen(III)-hydroxid [Fe(OH)₃], Strontiumhydroxid [Sr(OH)₂], Calciumhydroxid [Ca(OH)₂], Bismuthhydroxid [Bi(OH)₃], Bariumhydroxid [Ba(OH)₂], Chrom(III)-hydroxid [Cr(OH)₃], Vanadium(IV)-hydroxid [V(OH)₄], Cobalt(II)-hydroxid [Co(OH)₂], Manganhydroxid [Mn(OH)₂] oder eine Mischung von Hydroxiden;

Oxide oder wasserhaltige Oxide, wie Zinn(II)-oxidhydrat [SnO•xH₂O], Zinn(IV)-oxidhydrat [SnO₂•xH₂O], Titandioxidhydrat [TiO₂•xH₂O], Zirkondioxidhydrat [ZrO₂•xH₂O], Cer(III)-oxidhydrat [Ce₂O₃•xH₂O], Cer(IV)-oxidhydrat [CeO₂•xH₂O], Siliciumdioxid [SiO₂], Antimon(lll)-oxidhydrat [Sb₂O₃•xH₂O], Antimon(V)-oxidhydrat [Sb₂O₅•xH₂O] oder eine Mischung von Oxiden bzw. wasserhaltigen Oxiden.

Ebenfalls geeignet sind Carbonate, Nitrate, Fluoride, Fluorosilicate, Molybdate, Wolframate oder Sulfate wie Calciumcarbonat [CaCO₃], Magnesiumcarbonat [MgCO₃], Bismuthoxinitrat [BiO(NO₃)], Bismuthoxifluorid [BiOF], Calciumhexafluorosilicat [CaSiF₆], Calciummolybdat [CaMoO₄], insbesondere Sulfate wie Calciumsulfat [CaSO₄], oder Mischungen davon, insbesondere CaSO₄.

Weiterhin sind alle Kombinationen von Phosphaten, Hydroxiden, Oxiden sowie wasserhaltigen Oxiden und Salzen möglich, die sich auf die Pigmente aufbringen lassen.

Bevorzugt setzt man Hydroxide sowie Phosphate von Zink oder Aluminium und insbesondere die Phosphate von Zink und Aluminium ein. Besonders bevorzugt ist ein Gemisch von Zink- und Aluminiumphosphat.

Die Menge des Beschichtungsmaterials liegt zweckmässigerweise im Bereich von 1 bis 50 Gew.-%, vorzugsweise im Bereich von 5 bis 30 Gew.-% und besonders bevorzugt im Bereich von 8 bis 20 Gew.-%, bezogen aus das Gesamtgewicht des behandelten Pigments.

Die vorliegende Erfindung betrifft deshalb auch Zusammensetzungen, enthaltend die erfindungsgemässen Bismuthvanadat-Pigmente der Formel I, auf deren Oberfläche ein Beschichtungsmaterial aufgebracht ist.

Ferner betrifft eine Bevorzugung der vorliegenden Erfindung Zusammensetzungen, enthaltend die erfindungsgemässen Bismuthvanadat-Pigmente der Formel I, auf deren Oberfläche ein Beschichtungsmaterial von Aluminium-, Eisen-, Chrom-, Magnesium-, Titan-, Antimon-, Cerium-, Zirkonium- Zink- oder Siliziumverbindungen, oder Zinkphosphat oder Gemischen davon wie insbesondere Zink/Aluminium-Gemische, aufgebracht ist.

Des weiteren betrifft die vorliegende Erfindung ein Verfahren zur Herstellung der obigen Zusammensetzungen, indem man die Pigmente der Formel I mit einem Beschichtungsmaterial behandelt.

Ferner betrifft die vorliegende Erfindung ein Verfahren zur Herstellung der obigen Zusammensetzungen, indem man auf die Oberfläche der Pigmente der Formel I ein Beschichtungsmaterial von Aluminium-, Eisen-, Chrom-, Magnesium-, Titan-, Antimon-, Cerium-, Zirkonium-, Zink- oder Siliziumverbindungen, oder Gemischen davon aufbringt.

Zur Verbesserung bestimmter Pigmenteigenschaften können die erfindungsgemäss erhaltenen Produkte zusätzlich noch mit texturverbessernden Mitteln behandelt werden, beispielsweise mit langkettigen aliphatischen Alkoholen, Estem, Säuren oder deren Salzen, Aminen, Amiden sowie mit Wachsen oder harzartigen Substanzen, wie Abietinsäure oder deren Hydrierungsprodukten, Estern oder Salzen, ferner mit nicht-ionogenen, anionischen oder kationischen oberflächenaktiven Mitteln.

Die erfindungsgemäss erhaltenen Produkte können, falls erwünscht, nach üblichen Methoden, zum Beispiel wie in US 4,762,523 beschrieben, in staubfreie Pigmentpräparate überführt werden.

Daher betrifft die vorliegende Erfindung auch die Verwendung der erfindungsgemässen Pigmente der Formal (I) zur Herstellung staubfreier Pigmentpräparate.

Demgemäss betrifft die vorliegende Erfindung auch ein Verfahren zur Herstellung staubfreier Pigmente, indem man
a) die Pigmente der Formel (I) mit einer oberflächenaktiven Substanz vermischt,
b) anschliessend trocknet und dann
c) mit staubbindenden Mitteln
d) bis zum Erreichen des Schmierpunkts mischt.

Das Mischen von Pigment der Formel (I) mit den oberflächenaktiven Substanzen erfolgt im allgemeinen nach bekannten Methoden des Vermischens, durch beispielsweise Rühren, Mixen oder Kneten.

Die Pigmente der Formel (I) können gewünschtenfalls noch Wasser enthalten.

In der Regel wählt man die Menge an Wasser zum Pigment im Bereich von 80 bis 5 Gew.-%, bevorzugt im Bereich von 50 bis 10 Gew.-%, bezogen auf die Gesamtmenge der eingesetzten Stoffe.

Gewünschtenfalls kann man die Mischung enthaltend Pigment der Formel (I) und die oberflächenaktive Verbindung filtrieren und als Filterrückstand isolieren.

Die Mischung enthaltend Pigment der Formel (I) und die oberflächenaktive Verbindung oder der Filterrückstand werden bei Temperaturen im Bereich von 30 bis 150°C getrocknet.

In der Regel wird die getrocknete Mischung mit einem staubbindenden Mittel wie Mineralöl, dessen Siedepunkt bevorzugt über 70°C liegt, Wachsen oder Wasser vermischt.

In der Regel benötigt man bis zur Erreichung des Schmierpunkts 10 Minuten bis 2 Stunden, insbesondere 15 Minuten bis 45 Minuten. Dabei fällt das Produkt gewöhnlich als rieselfähiges, staubfreies Feingranulat an.

Der im Sinne dieser vorliegenden Erfindung angegebene Schmierpunkt ist dann erreicht, wenn sich das oben angegebene rieselfähige Feingranulat gebildet hat, das staubfrei ist und in geringem Umfang zu einem Schmiereffekt an den Wandungen der Mischaggregate führt. Der Schmierpunkt ist dann erreicht, wenn sich noch nicht eine zusammenhaftende kittartige Masse gebildet hat, wie sie z.B. nach der Ölzahlbestimmung nach DIN 53199 (siehe auch Ullmanns Encyklopaedie der technischen Chemie, 4. Auflage, Band 18, Seite 565) definiert ist.

Zur Erreichung des Schmierpunkts verwendet man üblicherweise allgemein bekannte Mischapparaturen wie Kneter oder Mixer und andere Apparate, die genügend Scherbeanspruchung erzeugen, um die Mischung bis zum Scherpunkt zu bringen.

Oberflächenaktive Substanzen können üblicherweise langkettige Polyester sein wie sie beispielsweise in DE-A 2,162,484 beschrieben sind.

In der Regel wählt man die Menge an oberflächenaktiver Substanz zum Pigment der Formel (l) im Bereich von 0,5 bis 10 Gew.-%, bezogen auf die Gesamtmenge der eingesetzten Stoffe.

In der Regel wählt man die Menge an staubbindenden Mitteln zum Pigment der Formel (I) im Bereich von 0,5 bis 25 Gew.-%, bezogen auf die Gesamtmenge der eingesetzten Stoffe.

In der Regel wählt man die Menge an Pigment der Formel (I) zum staubbindenden Mittel im Bereich von 75 bis 97,5 Gew.-%, bezogen auf die Gesamtmenge der eingesetzten Stoffe.

Des weiteren betrifft die vorliegende Erfindung Zusammensetzungen, enthaltend
(a) 75 bis 97,5 Gew.-% Pigment der Formel (I),
(b) 0,5 bis 10 Gew.-% oberflächenaktive Substanz und
(c) 0,5 bis 25 Gew.-% staubbindende Mittel,
wobei sich die Summe der Komponenten zu 100 Gew.-% ergänzen.

Des weiteren betrifft die vorliegende Erfindung die Verwendung der erfindungsgemässen Bismuthvanadat-Pigmente zum Pigmentieren von hochmolekularem organischen Material.

Das erfindungsgemäss zu färbende hochmolekulare organische Material kann natürlicher oder künstlicher Herkunft sein. Es besitzt üblicherweise ein durchschnittliches Molekulargewicht von 10⁵ bis 10⁷ g/mol. Es kann sich zum Beispiel um Naturharze oder trockene Öle, Kautschuk oder Casein oder um abgewandelte Naturstoffe wie Chlorkautschuk, ölmodifizierte Alkydharze, Viscose, um Celluloseether oder -ester wie Ethylcellulose, Celluloseacetat, -propionat, und -butyrat sowie Nitrocellulose, handeln, insbesondere aber um vollsynthetetische organische Polymere (Duro- und Thermoplaste), wie sie durch Polymerisation wie Polykondensation oder Polyaddition erhalten werden können. Zur Klasse der Polymere gehören beispielsweise Polyolefine wie Polyethylen, Polypropylen, Polyisobutylen, ferner substituierte Polyolefine, wie Polymerisate von Monomeren wie Vinylchlorid, Vinylacetat, Styrol, Acrylnitril, Acrylsäureester, Methacrylsäureester, Fluorpolymerisate wie zum Beispiel Polyfluorethylen, Polytrifluorchlorethylen oder Tetrafluorethylen/Hexafluoropropylen-Mischpolymerisat sowie Kopolymerisate der erwähnten Monomere, insbesondere ABS (Acrylnitril/Butadien/Styrol) oder EVA (Ethylen/Vinylacetat). Aus der Reihe der Polyadditions- und Polykondensationsharze handelt es sich beispielsweise um Kondensationsprodukte von Formaldehyd mit Phenolen, die sogenannten Phenoplaste, und den Kondensationsprodukten von Formaldehyd und Harnstoff, Thioharnstoff und Melamin, die sogenannten Aminoplaste, ferner die als Lackharze verwendeten Polyester, und zwar sowohl gesättigte wie zum Beispiel Alkydharze, als auch ungesättigte wie beispielsweise Maleinharze, ferner die linearen Polyester, Polyamide, Polyurethane, Polycarbonate, Polyphenylenoxide oder Silikone, Silikonharze.

Die erwähnten hochmolekularen Verbindungen können einzeln oder in Gemischen als plastische Massen, Schmelzen oder in Form von Spinnlösungen, Lacken oder Druckfarben vorliegen. Je nach Verwendungszweck erweist es sich als vorteilhaft, die erfindungsgemässen Bismuthvanadat-Pigmente als Toner oder in Form von Präparaten einzusetzen. Die erfindungsgemäss erhaltenen Pigmente eignen sich bevorzugt zum Pigmentieren von Anstrichstoffen, insbesondere von Automobillacken.

Zum Pigmentieren der hochmolekularen, organischen Substanzen mit den erfindungsgemäss erhaltenen Verbindungen mischt man letztere beispielsweise in Form von Masterbatches den hochmolekularen, organischen Substanzen unter Verwendung von Walzwerken, Misch- oder Mahlapparaten zu. Das pigmentierte Material wird hierauf nach an sich bekannten Verfahren wie Kalandrieren, Pressen, Strangpressen, Streichen, Giessen oder Spritzgiessen in die gewünschte endgültige Form gebracht. Oft ist es erwünscht, zur Herstellung von nicht starren Formlingen oder zur Verringerung ihrer Sprödigkeit den hochmolekularen organischen Verbindungen vor der Verformung sogenannte Weichmacher einzuverleiben. Als solche können zum Beispiel Ester der Phosphorsäure, Phthalsäure oder Sebacinsäure dienen. Die Weichmacher können vor oder nach der Einverleibung der erfindungsgemäss erhaltenen Verbindungen in die Polymere eingearbeitet werden. Es ist ferner möglich, zwecks Erzielung verschiedener Farbtöne den hochmolekularen, organischen Substanzen neben den erfindungsgemäss erhaltenen Verbindungen noch Füllstoffe oder andere farbgebende Bestandteile wie Weiss-, Bunt- oder Schwarzpigmente, in beliebigen Mengen zuzufügen.

Zum Pigmentieren von Lacken, Anstrichstoffen und Druckfarben werden die hochmolekularen organischen Materialien und die erfindungsgemäss erhaltenen Pigmente gegebenenfalls zusammen mit Zusatzstoffen, wie Füllmitteln, anderen Pigmenten, Sikkativen oder Weichmachern, in einem gemeinsamen organischen Lösungsmittel oder Lösungsmittelgemisch fein dispergiert oder gelöst. Man kann dabei so verfahren, dass man die einzelnen Komponenten für sich oder auch mehrere gemeinsam dispergiert oder löst, und erst hierauf alle Komponenten zusammenbringt.

Bezogen auf das zu pigmentierende hochmolekulare organische Material kann man die erfindungsgemässen Bismuthvanadat-Pigmente in einer Menge von 0,001 bis 75 Gew.-%, vorzugsweise 0,01 bis 50 Gew.-%, einsetzen.

Die erhaltenen Ausfärbungen, beispielsweise in Kunststoffen, Fasern, Lacken oder Drucken zeichnen sich insbesondere durch die ausserordentliche hohe Farbton-Reinheit und hohe Farbstärke aus. Bevorzugte Einsatzgebiete sind im Industrie- und Fahrzeuglackbereich zur Herstellung bleifreier wetterechter brillanter Einzelfarbtöne sowie in Abmischungen mit anderen Pigmenten zur Einstellung bestimmter Farbtöne. Des weiteren besitzen sie gute Dispergierbarkeit, gute Überlackier-, Migrations-, Hitze-, Licht-, und Wetterbeständigkeit und zeichnen sich durch einen guten Glanz aus.

Die erfindungsgemässen Bismuthvanadat-Pigmente zeichnen sich aber ganz besonders durch ihre nicht-toxischen Eigenschaften aus. Die rotstichige Nuance, die mit diesen Pigmenten erreicht wird, erweitert den Farbraum und damit die Einsatzmöglichkeit von Bismuthvanadat-Pigmenten. Durch ihre hohe Brillanz und Farbstärke eignen sie sich hervorrragend als Einzelpigment, aber auch als Kombinationspigment in Mischfärbungen, insbesondere in Trichromiefärbungen, bei denen hohe Farbstärken erwünscht sind. Demnach besitzen die erfindungsgemässen Bismuthvanadat-Pigmente hervorragende Eigenschaften zum Einfärben von Kunststoffen, Druckfarben und wässerigen und/oder lösungsmittelhaltigen Lacken, insbesondere Automobillacken.

### Beispiele

Beispiel 1: 262,7 g Bismuthnitratpentahydrat, 8,7 g Calciumnitrattetrahydrat und 13,5 g Zirkoniumoxinitrat werden unter Rühren in 290,0 g Salpetersäure (58 gew.-%ig) und 1750 ml Wasser gelöst. Die erhaltene Lösung wird innerhalb von 5 Minuten unter intensivem Rühren mit einer Vanadat-Lösung, bestehend aus 129,3 g Natriumorthovanadat, 15,1 g Natriumhydroxid, 9,6 g Natriummolybdat und 15,9 g Natriumwasserglaslösung (27 Gew.-% SiO₂) in 1650 ml Wasser, versetzt. Der pH der entstandenen Suspension wird innerhalb von einigen Minuten durch Zugabe von 50 gew.-%iger Natronlauge auf einen pH-Wert von 3,5 angehoben. Nach einer Rührzeit von 60 Minuten erhöht man durch Zugabe von 20 gew.-%iger Natronlauge den pH-Wert der Suspension innerhalb von 5 Minuten auf einen Wert von 6,2 und rührt weitere 30 Minuten. Die erhaltene Suspension wird in drei gleiche Teile geteilt und laut untenstehender Arbeitsweise weiterverarbeitet.

Beispiel 1a): Ein Drittel der oben in Beispiel 1 beschriebenen Suspension wird mit 2 Liter Wasser, worin 7,1 g Natriumfluorid gelöst sind, verdünnt, dann auf 100°C erwärmt und bei dieser Temperatur 10 Stunden gerührt. Während dieser Zeit wird alle 2 Stunden mit Salpetersäure der pH-Wert auf 6,2 eingestellt. Nach beendeter Reaktionszeit erhöht man den pH mit Natriumhydroxid-Lösung auf 9,8 und rührt 10 Minuten bei 100°C nach. Nach Isolierung des Feststoffes durch Filtration bei 90°C, wobei sich der Filterkuchen während der Filtration abkühlt, wird dieser salzfrei gewaschen und während 16 Stunden bei 400°C getrocknet. Nach Abkühlen des Produktes wird dieses in einer Pulvermühle (Micromühle Culatti Nr. 3 mit Siebeinsatz 1 mm) durch Streichen des Pigments durch den Siebeinsatz der Pulvermühle, desagglomeriert.

Das erhaltene Pigment wird in einem Alkyd-Melamin-Lack nach folgender Vorgehensweise appliziert:

| | |
|---|---|
| 37,0 g | eines Alkyd-Melamin-Lackes der folgenden Zusammensetzung: |
| 18,7 g | eines kurzkettigen Alkydharzes (Setal® 84xx70 (70%) der Firma Synthese) |
| 7,2 g | eines Melaminharzes (Setamin® US 132 BB71 (70%) der Firma Synthese) |
| 7,8 g | SOLVESSO® 100 (Mischung aromatischer Kohlenwasserstoffe der Firma Exxon) |
| 1,7 g | n-Butanol |
| 0,8 g | DEPANOL®J (Terpen-Kohlenwasserstoff) |
| 0,8 g | Isophoron |

werden zusammen mit 11, 0 g des unter Beispiel 1a hergestellten Pigmentes und 40 g Glaskugeln (Durchmesser 3 mm) in einem 100 ml Glasgefäss mit Schraubdeckelverschluss gegeben und auf einer Scandex-Apparatur dispergiert, bis eine Feinheit von 10 µm (Hegman-Gauge) erreicht ist.

Der Lack wird dann auf einem Kontrastkarton ausgezogen (Nassfilmdicke 50 µm), 20 Minuten bei Raumtemperatur abgelüftet und danach 30 Minuten auf eine Temperatur von 130°C erhitzt.

Farbmessungen nach der CIELAB-Methode werden auf einem X-Rite Farbspektrophotometer, XR SP68T, unter Zuhilfenahme der Software CGREC, Version 1.5 gemessen und ergeben folgende Werte: L* von 86,6 und *h* von 88,5.

Alle Messungen werden unter einem Messwinkel von 10° unter Normlicht D65 durchgeführt.

Beispiel 1b): Arbeitsweise und Applikation wie unter Beispiel 1a beschrieben, jedoch mit dem Unterschied, dass der pH-Wert der Suspension während der Reaktionszeit bei 100°C auf 6,0 zurückgestellt wird.
Die Farbmessungen ergeben folgende Werte: L* von 86,7 und *h* von 88,1.

Beispiel 1c): Arbeitsweise und Applikation wie unter Beispiel 1a beschrieben, jedoch mit dem Unterschied, dass der pH-Wert der Suspension während der Reaktionszeit bei 100°C auf einen pH-Wert von 5,9 zurückgestellt wird.
Die Farbmessungen ergeben folgende Werte: L* von 86,1 und *h* von 87,7.

Beispiel 2): 262,7 g Bismuthnitratpentahydrat, 4,4 g Calciumnitrattetrahydrat und 10,8 g Zirkoniumoxinitrat werden unter Rühren in 130,0 g Salpetersäure (58 gew.-%ig) und 1750 ml Wasser gelöst. Die erhaltene Lösung wird innerhalb von 5 Minuten unter intensivem Rühren mit einer Vanadat-Lösung, bestehend aus 129,3 g Natriumorthovanadat, 14,6 g Natriumhydroxid, 4,8 g Natriummolybdat und 13,0 g Natrium Wasserglaslösung (27 Gew.-% SiO₂) in 1940 ml Wasser, versetzt. Der pH der entstandenen Suspension wird innerhalb von einigen Minuten durch Zugabe von 50 gew.-%iger Natronlauge auf einen Wert von 3,5 angehoben. Nach einer Rührzeit von 60 Minuten erhöht man durch Zugabe von 20 gew.-%iger Natronlauge den pH der Suspension innerhalb von 5 Minuten auf einen Wert von 5,9 und lässt weitere 90 Minuten rühren. Ein Drittel der erhaltenen Suspension wird laut untenstehender Arbeitsweise weiterverarbeitet.

Beispiel 2a): Arbeitsweise und Applikation wie unter Beispiel 1a beschrieben, jedoch mit dem Unterschied, dass man die in Beispiel 2 erhaltene Suspension während der Reaktionszeit bei 100°C durch Zudosieren von Salpetersäure statt auf einem pH-Wert von 6,2 auf einem pH-Wert von 5,9 gehalten wird.
Die Farbmessungen ergeben folgende Werte: L* von 85,0 und *h* von 87,0.

Beispiel 3): 262,7 g Bismuthnitratpentahydrat, 4,4 g Calciumnitrattetrahydrat und 10,8 g Zirkoniumoxinitrat werden unter Rühren in 130,0 g Salpetersäure (58 gew.-%ig) und 1750 ml Wasser gelöst. Die erhaltene Lösung wird auf 70°C erwärmt und innerhalb von 5 Minuten unter intensivem Rühren mit einer Vanadat-Lösung, bestehend aus 129,3 g Natriumorthovanadat, 14,6 g Natriumhydroxid, 4,8 g Natriummolybdat und 13,0 g Natrium Wasserglaslösung (27 Gew.-% SiO₂) in 1940 ml Wasser, versetzt. Der pH der entstandenen Suspension wird innerhalb von einigen Minuten durch Zugabe von 50 gew.-%iger Natronlauge auf einen Wert von 3,5 angehoben. Nach einer Rührzeit von 60 Minuten erhöht man durch Zugabe von 20 gew.-%iger Natronlauge den pH der Suspension innerhalb von 5 Minuten auf einen Wert von 5,9 und lässt weitere 90 Minuten rühren.
(Ein Drittel der erhaltenen Suspension wird nach untenstehender Arbeitsweise weiterverarbeitet.)

### Beispiel 3a):

Ein Drittel der nach Beispiel 3 erhaltenen Suspension wird mit 3 Liter Wasser, worin 3,5 g Natriumfluorid gelöst sind, verdünnt, auf 100°C erwärmt und bei dieser Temperatur 3 Stunden gerührt. Während dieser Zeit wird der pH der Suspension durch Zudosieren von Salpetersäure auf einen Wert von 5,9 gehalten. Man lässt die Suspension unter Rühren während 16 Stunden auf Raumtemperatur abkühlen und erwärmt danach erneut auf 100°C unter Konstanthaltung des pH-Werts bei 5,9 und lässt für weitere 5 Stunden reagieren. Nach beendeter Reaktionszeit erhöht man den pH mit Natriumhydroxid-Lösung auf 9,8 und rührt 10 Minuten bei 100 °C nach. Nach Isolierung des Feststoffes durch Filtration bei 90°C, (Filterkuchen kühlt sich während der Filtration ab), wird dieser salzfrei gewaschen und während 16 Stunden bei 400°C getrocknet. Nach Abkühlen des Produktes wird dieses in einer Pulvermühle (Micromühle Culatti Nr. 3 mit Siebeinsatz 1 mm) durch Streichen des Pigments durch den Siebeinsatz der Pulvermühle, desagglomeriert.

Die Applikation erfolgt wie unter Beispiel 1a beschrieben ist.
Die Farbmessungen ergeben folgende Werte: L* von 85,3 und *h* von 87,0.

Beispiel 4): 1050,5 g Bismuthnitratpentahydrat, 17,6 g Calciumnitrattetrahydrat und 94,6 g Zirkoniumoxinitrat werden unter Rühren in 570,0 g Salpetersäure (58 gew.-%ig) und 7,2 Liter Wasser gelöst. Die erhaltene Lösung wird auf 70°C erwärmt und innerhalb von 30 Minuten unter intensivem Rühren mit einer Vanadat-Lösung, bestehend aus 560,6 g Natriumorthovanadat, 64,6 g Natriumhydroxid, 19,2 g Natriummolybdat und 90,0 g Natrium Wasserglaslösung (27 Gew.-% SiO₂) in 32 Liter Wasser, versetzt, wobei die Temperatur auf konstant 70°C gehalten wird. Der pH der entstandenen Suspension wird innerhalb von einigen Minuten durch Zugabe von 50 gew.-%iger Natronlauge auf einen Wert von 2,5 angehoben. Nach einer Rührzeit von 60 Minuten erhöht man durch Zugabe von 20 gew.-%iger Natronlauge den pH der Suspension innerhalb von 15 Minuten auf einen Wert von 7,2 und lässt weitere 30 Minuten rühren. Nach Zugabe von 48 g Natriumfluorid zu der Suspension erhöht man die Temperatur auf 85°C und lässt während 20 Stunden bei dieser Temperatur rühren. Nach beendeter Reaktionszeit erhöht man den pH mit verdünnter Natriumhydroxid-Lösung auf 9,8 und rührt 30 Minuten nach. Nach Isolierung des Feststoffes durch Filtration wird dieser salzfrei gewaschen und während 16 Stunden bei 400°C getrocknet. Nach Abkühlen des Produktes wird dieses in einer Pulvermühle (Micromühle Culatti Nr. 3 mit Siebeinsatz 1 mm) durch Streichen des Pigments durch den Siebeinsatz der Pulvermühle, desagglomeriert.

Die Applikation erfolgt wie unter Beispiel 1 a beschrieben ist.
Die Farbmessungen ergeben folgende Werte: L* von 84,3 und *h* von 85,7.

Beispiel 5a): 87,5 g Bismuthnitratpentahydrat, 1,5 g Calciumnitrattetrahydrat und 4,5 g Zirkoniumoxinitrat werden unter Rühren in 48,0 g Salpetersäure (58 gew.-%ig) und 600 ml Wasser gelöst. Die erhaltene Lösung wird auf 70°C erwärmt und innerhalb von 5 Minuten unter intensivem Rühren mit einer Vanadat-Lösung, bestehend aus 43,1 g Natriumorthovanadat, 4,7 g Natriumhydroxid, 1,6 g Natriummolybdat und 4,3 g Natrium Wasserglaslösung (27 Gew.-% SiO₂) in 3 Liter Wasser, versetzt. Der pH der entstandenen Suspension wird innerhalb von einigen Minuten durch Zugabe von 50 gew.-%iger Natronlauge auf einen Wert von 2,5 angehoben. Nach einer Rührzeit von 60 Minuten erhöht man durch Zugabe von 20 gew.-%iger Natronlauge den pH der Suspension innerhalb von 5 Minuten auf einen Wert von 7,2 und lässt weitere 60 Minuten rühren. Nach Zugabe von 4,0 g Natriumfluorid zu der Suspension erhöht man die Temperatur auf 95°C und lässt während 10 Stunden bei dieser Temperatur rühren. Nach beendeter Reaktionszeit erhöht man den pH mit verdünnter Natriumhydroxidlösung auf 9,8 und rührt 15 Minuten nach. Nach Isolierung des Feststoffes durch Filtration wird dieser salzfrei gewaschen und während 16 Stunden bei 100°C getrocknet. Nach Abkühlen des Produktes wird dieses in einer Pulvermühle (Micromühle Culatti Nr. 3 mit Siebeinsatz 1 mm) durch Streichen des Pigments durch den Siebeinsatz der Pulvermühle, desagglomeriert.

Applikation wie unter Beispiel 1 beschrieben
Die Farbmessungen ergeben folgende Werte: L* von 82,9 und h von 86,0.

Beispiel 5b): Arbeitsweise und Applikation wie unter Beispiel 5a beschrieben, jedoch mit dem Unterschied, dass der Feststoff nach der Isolation und dem salzfreien Waschen während 16 Stunden statt bei 100°C bei 400°C getrocknet wird.

Die Farbmessungen ergeben folgende Werte: L* von 85,3 und *h* von 86,3.

Beispiel 5c): Arbeitsweise und Applikation wie unter Beispiel 5a beschrieben, jedoch mit dem Unterschied, dass die Mengen der eingesetzten Stoffe, wie folgt, verändert werden:
5,6 g Zirkoniumoxinitrat, 5,4 g Natriumwasserglaslösung, 44,6 g Natriumorthovanadat und
4,9 g Natriumhydroxid werden eingewogen.

Die Farbmessungen ergeben folgende Werte: L* von 82,2 und *h* von 85,7.

Beispiel 5d): Arbeitsweise und Applikation wie unter Beispiel 5a beschrieben, jedoch mit dem Unterschied, dass die Mengen der eingesetzten Stoffe, wie folgt, verändert werden:
5,6 g Zirkoniumoxinitrat, 5,4 g Natrium Wasserglaslösung, 44,6 g Natriumorthovanadat und
4,9 g Natriumhydroxid werden eingewogen. Des weiteren wird der Feststoff nicht bei 100°C, sondern bei 400°C getrocknet.

Die Farbmessungen ergeben folgende Werte: L* von 84,8 und *h* von 85,7.

Beispiel 5e): Arbeitsweise und Applikation wie unter Beispiel 5a beschrieben, jedoch mit dem Unterschied, dass die Mengen der eingesetzten Stoffe, wie folgt, verändert werden:
6,1 g Zirkoniumoxinitrat, 5,8 g Natrium Wasserglaslösung, 45,5 g Natriumorthovanadat und
5,0 g Natriumhydroxid werden eingewogen.

Die Farbmessungen ergeben folgende Werte: L* von 82,4 und *h* von 85,6.

Beispiel 5f): Arbeitsweise und Applikation wie unter Beispiel 5a beschrieben, jedoch mit dem Unterschied, dass die Mengen der eingesetzten Stoffe, wie folgt, verändert werden:
6,1 g Zirkoniumoxinitrat, 5,8 g Natrium Wasserglaslösung, 45,5 g Natriumorthovanadat und
5,0 g Natriumhydroxid werden eingewogen. Des weiteren wird der Feststoff nicht bei 100°C, sondern bei 400°C getrocknet.

Die Farbmessungen ergeben folgende Werte: L* von 84,7 und *h* von 85,5.

Beispiel 5g): Arbeitsweise und Applikation wie unter Beispiel 5a beschrieben, jedoch mit dem Unterschied, dass die Mengen der eingesetzten Stoffe, wie folgt, verändert werden:
7,9 g Zirkoniumoxinitrat, 7,5 g Natriumwasserglaslösung, 49,2 g Natriumorthovanadat und
5,4 g Natriumhydroxid werden eingewogen.

Die Farbmessungen ergeben folgende Werte: L* von 82,5 und *h* von 85,4.

Beispiel 5h): Arbeitsweise und Applikation wie unter Beispiel 5a beschrieben, jedoch mit dem Unterschied, dass die Mengen der eingesetzten Stoffe, wie folgt, verändert werden:
7,9 g Zirkoniumoxinitrat, 7,5 g Natriumwasserglaslösung, 49,2 g Natriumorthovanadat und
5,4 g Natriumhydroxid werden eingewogen. Des weiteren wird der Feststoff nicht bei 100°C, sondern bei 400°C getrocknet.

Die Farbmessungen ergeben folgende Werte: L* von 83,7 und *h* von 84,6.

Beispiel 6a): 78,8 g Bismuthnitratpentahydrat und 7,1 g Zirkoniumoxinitrat werden unter Rühren in 39,0 g Salpetersäure (58 Gew.-%) und 525 ml Wasser gelöst. Die erhaltene Lösung wird auf 70°C erwärmt und innerhalb von 5 Minuten unter intensivem Rühren mit einer 50°C warmen Vanadat-Lösung, bestehend aus 41,0 g Natriumorthovanadat und 1,9 g Natriumhydroxid in 3000 ml Wasser, versetzt, wodurch die Temperatur auf ca. 60°C abfällt. Der pH der entstandenen Suspension wird innerhalb von einigen Minuten durch Zugabe von 50 gew.-%iger Natronlauge auf einen Wert von 2,5 angehoben. Nach einer Rührzeit von 120 Minuten erhöht man durch Zugabe von 50 gew.-%iger Natronlauge den pH der Suspension innerhalb von 5 Minuten auf einen Wert von 6,0 und lässt weitere 15 Minuten rühren. Zu dieser Suspension gibt man 0,42 g Natriumfluorid in fester Form zu und erwärmt auf 95°C. Nach Erreichen dieser Temperatur wird der pH der Suspension unter Rühren mit verdünnter Salpetersäure auf einen Wert von 5,5 eingestellt. Nach einer Reaktionszeit von 24 Stunden erhöht man den pH mit Natriumhydroxid-Lösung auf 9,8 und rührt 10 Minuten nach. Nach Isolation des Feststoffes durch Filtration wird dieser salzfrei gewaschen und während 24 Stunden bei 400°C getrocknet. Nach Abkühlen des Produktes wird dieses in einer Pulvermühle (Micromühle Culatti Nr. 3 mit Siebeinsatz 1 mm) durch Streichen des Pigments durch den Siebeinsatz der Pulvermühle, desagglomeriert.

Die Applikation erfolgt wie unter Beispiel 1a beschrieben ist.
Die Farbmessungen ergeben folgende Werte: L* von 84,5 und *h* von 90,7.

Beispiel 6b): Arbeitsweise und Applikation wie unter Beispiel 6a beschrieben, jedoch mit dem Unterschied, dass zu der Suspension nach Erhöhung des pH auf 6,0 kein Natriumfluorid zugegeben wird. Die Kristallisationszeit bei 95°C beträgt 24 Stunden.

Die Farbmessungen ergeben folgende Werte: L* von 86,8 und *h* von 92,6.

Beispiel 6c): Arbeitsweise und Applikation wie unter Beispiel 6a beschrieben, jedoch mit dem Unterschied, dass zu der Suspension nach Erhöhung des pH auf 6,0 4,2 g Natriumfluorid zugegeben wird. Kristallisationszeit bei 95°C ist 18 Stunden.

Die Farbmessungen ergeben folgende Werte: L* von 85,8 und *h* von 90,3.

Beispiel 6d): Arbeitsweise und Applikation wie unter Beispiel 6a beschrieben, jedoch mit dem Unterschied, dass zu der Suspension nach Erhöhung des pH auf 6,0 8,4 g Natriumfluorid zugegeben wird. Kristallisationszeit bei 95°C ist 16 Stunden.

Die Farbmessungen ergeben folgende Werte: L* von 83,6 und *h* von 84,8.

Beispiel 6e): Arbeitsweise und Applikation wie unter Beispiel 6a beschrieben, jedoch mit dem Unterschied, dass zu der Suspension nach Erhöhung des pH auf 6,0 10,5 g Natriumfluorid zugegeben wird. Kristallisationszeit bei 95°C ist 14 Stunden.

Die Farbmessungen ergeben folgende Werte: L* von 83,5 und *h* von 85,1.

Beispiel 6f): Arbeitsweise und Applikation wie unter Beispiel 6a beschrieben, jedoch mit dem Unterschied, dass zu der Suspension nach Erhöhung des pH auf 6,0 12,6 g Natriumfluorid zugegeben wird. Kristallisationszeit bei 95°C ist 8 Stunden.

Die Farbmessungen ergeben folgende Werte: L* von 83,3 und *h* von 85,3.

Beispiel 6g): Arbeitsweise und Applikation wie unter Beispiel 6a beschrieben, jedoch mit dem Unterschied, dass zu der Suspension nach Erhöhung des pH auf 6,0 14,7 g Natriumfluorid zugegeben wird. Kristallisationszeit bei 95°C ist 8 Stunden.

Die Farbmessungen ergeben folgende Werte: L* von 84,2 und *h* von 86,2.

Beispiel 6h): Arbeitsweise und Applikation wie unter Beispiel 6a beschrieben, jedoch mit dem Unterschied, dass zu der Suspension nach Erhöhung des pH auf 6,0 16,8 g Natriumfluorid zugegeben wird. Kristallisationszeit bei 95°C ist 8 Stunden.

Die Farbmessungen ergeben folgende Werte: L* von 85,0 und *h* von 86,8.

Beispiel 6i): Arbeitsweise und Applikation wie unter Beispiel 6a beschrieben, jedoch mit dem Unterschied, dass zu der Suspension nach Erhöhung des pH auf 6,0 18,9 g Natriumfluorid zugegeben wird. Kristallisationszeit bei 95°C ist 6 Stunden.

Die Farbmessungen ergeben folgende Werte: L* von 85,0 und *h* von 87,9.

Beispiel 6j): Arbeitsweise und Applikation wie unter Beispiel 6a beschrieben, jedoch mit dem Unterschied, dass zu der Suspension nach Erhöhung des pH auf 6,0 21,0 g Natriumfluorid zugegeben wird. Kristallisationszeit bei 95°C ist 5 Stunden.

Die Farbmessungen ergeben folgende Werte: L* von 86,8 und *h* von 91,2.

Beispiel 7a): 109,5 g Bismuthnitratpentahydrat, 1,9 g Calciumnitrattetrahydrat und 9,9 g Zirkoniumoxinitrat werden unter Rühren in 53,0 g Salpetersäure (58 gew.-%ig) und 730 ml Wasser gelöst. Die erhaltene Lösung wird auf 70°C erwärmt und innerhalb von 3 Minuten unter intensivem Rühren mit einer 50°C warmen Vanadat-Lösung, bestehend aus 51,2 g Natriumorthovanadat, 2,0 g Natriummolybdatdihydrat, 9,4 g Natrium Wasserglaslösung (27% Gew.-% SiO₂) und 2,4 g Natriumhydroxid in 3000 ml Wasser, versetzt, wodurch die Temperatur auf ca. 60°C abfällt. Der pH der entstandenen Suspension wird innerhalb von einigen Minuten durch Zugabe von 50 gew.-%iger Natronlauge auf einen Wert von 2,5 angehoben. Nach einer Rührzeit von 60 Minuten erhöht man durch Zugabe von 50 gew.-%iger Natronlauge den pH der Suspension innerhalb von 5 Minuten auf einen Wert von 7,2 und lässt weitere 15 Minuten rühren. Zu dieser Suspension gibt man 0,42 g Natriumfluorid in fester Form zu und erwärmt auf 95°C. Nach Erreichen dieser Temperatur wird der pH der Suspension unter Rühren mit verdünnter Salpetersäure auf einen Wert von 5,5 eingestellt. Nach einer Reaktionszeit von 18 Stunden erhöht man den pH mit Natriumhydroxid-Lösung auf 9,8 und rührt 10 Minuten nach. Nach Isolation des Feststoffes durch Filtration wird dieser salzfrei gewaschen und während 16 Stunden bei 400°C getrocknet. Nach Abkühlen des Produktes wird dieses in einer Pulvermühle (Micromühle Culatti Nr. 3 mit Siebeinsatz 1 mm) durch Streichen des Pigments durch den Siebeinsatz der Pulvermühle, desagglomeriert.

Die Applikation erfolgt wie unter Beispiel 1a beschrieben ist.
Die Farbmessungen ergeben folgende Werte: L* von 87,1 und *h* von 91,4.

Beispiel 7b): Arbeitsweise und Applikation wie unter Beispiel 7a beschrieben, jedoch mit dem Unterschied, dass zu der Suspension nach Erhöhung des pH auf 7,2 8,4 g Natriumfluorid zugegeben wird. Die Kristallisationszeit bei 95°C beträgt 18 Stunden.

Die Farbmessungen ergeben folgende Werte: L* von 86,0 und *h* von 88,5.

Beispiel 7c): Arbeitsweise und Applikation wie unter Beispiel 7a beschrieben, jedoch mit dem Unterschied, dass zu der Suspension nach Erhöhung des pH auf 7,2 14,7 g Natriumfluorid zugegeben wird. Kristallisationszeit bei 95°C ist 8 Stunden.

Die Farbmessungen ergeben folgende Werte: L* von 85,1 und *h* von 87,4.

Beispiel 7d): Arbeitsweise und Applikation wie unter Beispiel 7a beschrieben, jedoch mit dem Unterschied, dass zu der Suspension nach Erhöhung des pH auf 7,2 18,4 g Natriumfluorid zugegeben wird. Die Kristallisationszeit bei 95°C beträgt 8 Stunden.

Die Farbmessungen ergeben folgende Werte: L* von 85,8 und *h* von 88,6.

Beispiel 8a): 78,8 g Bismuthnitratpentahydrat, 1,4 g Calciumnitrattetrahydrat und 7,1 g Zirkoniumoxinitrat werden unter Rühren in 39,0 g Salpetersäure (58 gew.-%ig) und 525 ml Wasser gelöst. Die erhaltene Lösung wird auf 70°C erwärmt und innerhalb von 4 Minuten unter intensivem Rühren mit einer Vanadat-Lösung, bestehend aus 36,9 g Natriumorthovanadat, 1,4 g Natriummolybdatdihydrat und 1,7 g Natriumhydroxid in 3000 ml Wasser, versetzt, wodurch die Temperatur auf ca 30°C abfällt. Der pH der entstandenen Suspension wird innerhalb von einigen Minuten durch Zugabe von 50 gew.-%iger Natronlauge auf einen Wert von 2,5 angehoben. Nach einer Rührzeit von 60 Minuten erhöht man durch Zugabe von 50 gew.-%iger Natronlauge den pH der Suspension innerhalb von 5 Minuten auf einen Wert von 7,2 und lässt weitere 15 Minuten rühren. Zu dieser Suspension gibt man 0,42 g Natriumfluorid in fester Form zu und erwärmt auf 95°C. Nach Erreichen dieser Temperatur wird der pH der Suspension unter Rühren mit verdünnter Salpetersäure auf einen Wert von 5,5 eingestellt. Nach einer Reaktionszeit von 18 Stunden erhöht man den pH mit Natriumhydroxid-Lösung auf 9,8 und rührt 10 Minuten nach. Nach Isolation des Feststoffes durch Filtration wird dieser salzfrei gewaschen und während 24 Stunden bei 400°C getrocknet. Nach Abkühlen des Produktes wird dieses in einer Pulvermühle (Micromühle Culatti Nr. 3 mit Siebeinsatz 1 mm) durch Streichen des Pigments durch den Siebeinsatz der Pulvermühle, desagglomeriert.

Die Applikation erfolgt wie unter Beispiel 1a beschrieben ist.
Die Farbmessungen ergeben folgende Werte: L* von 87,7 und *h* von 91,1.

Beispiel 8b): Arbeitsweise und Applikation wie unter Beispiel 8a beschrieben, jedoch mit dem Unterschied, dass zu der Suspension nach Erhöhung des pH auf 7,2 4,2 g Natriumfluorid zugegeben wird. Die Kristallisationszeit bei 95°C beträgt 16 Stunden.

Die Farbmessungen ergeben folgende Werte: L* von 87,7 und *h* von 91,3.

Beispiel 8c): Arbeitsweise und Applikation wie unter Beispiel 8a beschrieben, jedoch mit dem Unterschied, dass zu der Suspension nach Erhöhung des pH auf 7,2 8,4 g Natriumfluorid zugegeben wird. Die Kristallisationszeit bei 95°C beträgt 16 Stunden.

Die Farbmessungen ergeben folgende Werte: L* von 86,2 und *h* von 88,8.

Beispiel 8d): Arbeitsweise und Applikation wie unter Beispiel 8a beschrieben, jedoch mit dem Unterschied, dass zu der Suspension nach Erhöhung des pH auf 7,2 10,5 g Natriumfluorid zugegeben wird. Die Kristallisationszeit bei 95°C beträgt 16 Stunden.

Die Farbmessungen ergeben folgende Werte: L* von 85,3 und *h* von 87,6.

Beispiel 8e): Arbeitsweise und Applikation wie unter Beispiel 8a beschrieben, jedoch mit dem Unterschied, dass zu der Suspension nach Erhöhung des pH auf 7,2 12,6 g Natriumfluorid zugegeben wird. Die Kristallisationszeit bei 95°C beträgt 16 Stunden.

Die Farbmessungen ergeben folgende Werte: L* von 84,8 und *h* von 86,4.

Beispiel 8f): Arbeitsweise und Applikation wie unter Beispiel 8a beschrieben, jedoch mit dem Unterschied, dass zu der Suspension nach Erhöhung des pH auf 7,2 14,7 g Natriumfluorid zugegeben wird. Die Kristallisationszeit bei 95°C beträgt 10 Stunden.

Die Farbmessungen ergeben folgende Werte: L* von 84,7 und *h* von 86,5.

Beispiel 8g): Arbeitsweise und Applikation wie unter Beispiel 8a beschrieben, jedoch mit dem Unterschied, dass zu der Suspension nach Erhöhung des pH auf 7,2 16,8 g Natriumfluorid zugegeben wird. Die Kristallisationszeit bei 95°C beträgt 10 Stunden.

Die Farbmessungen ergeben folgende Werte: L* von 84,8 und *h* von 87,0.

Beispiel 8h): Arbeitsweise und Applikation wie unter Beispiel 8a beschrieben, jedoch mit dem Unterschied, dass zu der Suspension nach Erhöhung des pH auf 7,2 18,9 g Natriumfluorid zugegeben wird. Die Kristallisationszeit bei 95°C beträgt 10 Stunden.

Die Farbmessungen ergeben folgende Werte: L* von 85,6 und *h* von 87,6.

Beispiel 8i): Arbeitsweise und Applikation wie unter Beispiel 8a beschrieben, jedoch mit dem Unterschied, dass zu der Suspension nach Erhöhung des pH auf 7,2 21,0 g Natriumfluorid zugegeben wird. Die Kristallisationszeit bei 95°C beträgt 10 Stunden.

Die Farbmessungen ergeben folgende Werte: L* von 85,2 und *h* von 87,8.

## Patentansprüche

1. Zirkonium enthaltende, rotstichige Bismuthvanadat-Pigmente der allgemeinen Formel I,
BiV_{b}Oₓ•Ca_{c}(MoO₄)_{d}•ZrₑSi_{f}O_{y}•F_{z} I
worin die Variablen
b 0,8 bis 1,5;
c 0 bis 0,3;
d 0 bis 0,3;
e 0,01 bis 0,3;
f 0 bis 0,3;
x (3/2 + 5b/2);
y (2e + 2 f);
z 0,05 bis 1,0
bedeuten.

2. Bismuthvanadat-Pigmente nach Anspruch 1, worin f den Wert Null hat.

3. Bismuthvanadat-Pigmente nach Anspruch 1, worin die Variablen
b 0,8 bis 1,5;
c 0,01 bis 0,3;
d 0,01 bis 0,3;
e 0,01 bis 0,3;
f 0,01 bis 0,3;
x (3/2 + 5b/2);
y (2e + 2 f);
z 0,05 bis 1,0
bedeuten.

4. Bismuthvanadat-Pigmente nach Anspruch 1, worin die Variablen
b 0,8 bis 1,5;
c 0;
d 0;
e 0,01 bis 0,3;
f 0 bis 0,3;
x (3/2 + 5b/2);
y (2e + 2 f);
z 0,05 bis 1,0
bedeuten.

5. Bismuthvanadat-Pigmente nach Anspruch 1, worin die Variablen
b 0,8 bis 1,5;
c 0;
d 0;
e 0,01 bis 0,3;
f 0;
x (3/2 + 5b/2);
y (2e + 2 f);
z 0,05 bis 1,0
bedeuten.

6. Bismuthvanadat-Pigmente nach einem der Ansprüche 1 bis 5, **dadurch gekennzeichnet, dass** sie Helligkeitswerte L* im Bereich von 79 bis 91 besitzen.

7. Verfahren zur Herstellung der Bismuthvanadat-Pigmente nach einem der Ansprüche 1 bis 6, **dadurch gekennzeichnet, dass** man eine wässerige Mischung enthaltend Bismuth-, Vanadium- und Zirkonium-Salze, Salze von Fluor sowie gewünschtenfalls Salze der Elemente ausgewählt aus der Gruppe bestehend aus Calcium, Molybdän und Silizium , während 2 bis 30 Stunden bei einem pH-Bereich von 4,5 bis 8 behandelt.

8. Bismuthvanadat-Pigmente erhältlich durch das Verfahren gemäss Anspruch 7.

9. Zusammensetzungen, enthaltend Pigmente nach einem der Ansprüche 1 bis 6 oder 8 , auf deren Oberfläche ein Beschichtungsmaterial aufgebracht ist.

10. Zusammensetzungen, enthaltend
(a) 75 bis 97,5 Gew.-% Pigment der Formel (I) nach einem der Ansprüche 1 bis 6 oder 8 oder der Zusammensetzung nach Anspruch 9,
(b) 0,5 bis 10 Gew.-% oberflächenaktive Substanz und
(c) 0,5 bis 25 Gew.-% staubbindende Mittel,
wobei die Summe der Komponenten sich zu 100 Gew.-% ergänzen.

11. Verwendung der Pigmente nach einem der Ansprüche 1 bis 6 oder 8 oder der Zusammensetzung nach einem der Ansprüche 9 oder 10 zum Pigmentieren von hochmolekularem organischen Material.

## Claims

1. A zirconium-containing, red-tinged bismuth vanadate pigment of general formula I,
BiV_{b}Oₓ•Ca_{c}(MoO₄)_{d}•ZrₑSi_{f}O_{y}•F_{z} I
wherein the variables are
b 0.8 to 1.5;
c 0 to 0.3;
d 0 to 0.3;
e 0.01 to 0.3;
f 0 to 0.3;
x (3/2 + 5b/2);
y (2e + 2 f);
z 0.05 to 1.0.

2. A bismuth vanadate pigment according to claim 1, wherein f has the value zero.

3. A bismuth vanadate pigment according to claim 1, wherein the variables are
b 0.8 to 1.5;
c 0.01 to 0.3;
d 0.01 to 0.3;
e 0.01 to 0.3;
f 0.01 to 0.3;
x (3/2 + 5b/2);
y (2e + 2 f);
z 0.05 to 1.0.

4. A bismuth vanadate pigment according to claim 1, wherein the variables are
b 0.8 to 1.5;
c 0;
d 0;
e 0.01 to 0.3;
f 0 to 0.3;
x (3/2 + 5b/2);
y (2e + 2 f);
z 0.05 to 1.0.

5. A bismuth vanadate pigment according to claim 1, wherein the variables are
b 0.8 to 1.5;
c 0;
d 0;
e 0.01 to 0.3;
f 0;
x (3/2 + 5b/2);
y (2e + 2 f);
z 0.05 to 1.0.

6. A bismuth vanadate pigment according to any one of claims 1 to 5, which has a brightness value L* in the range from 79 to 91.

7. A process for the preparation of bismuth vanadate pigment according to any one of claims 1 to 6, **characterized in that** an aqueous mixture comprising bismuth, vanadium and zirconium salts, salts of fluorine and, if desired, salts of elements selected from the group consisting of calcium, molybdenum and silicon, is treated for from 2 to 30 hours in a pH range of from 4.5 to 8.

8. A bismuth vanadate pigment obtainable by the process according to claim 7.

9. A composition comprising pigment according to any one of claims 1 to 6 or claim 8 to the surface of which a coating material has been applied.

10. A composition comprising
(a) from 75 to 97.5 % by weight of pigment of formula (I) according to any one of claims 1 to 6 or claim 8 or of the composition according to claim 9,
(b) from 0.5 to 10 % by weight of surface-active substance and
(c) from 0.5 to 25 % by weight of dust-binding agents,
the sum of the components adding up to 100 % by weight.

11. The use of pigment according to any one of claims 1 to 6 or claim 8 or of the composition according to either claim 9 or claim 10 in pigmenting high molecular weight organic material.

## Revendications

1. Pigments de vanadate de bismuth tirant sur le rouge, contenant du zirconium, de formule générale I
BiV_{b}Oₓ . Ca_{c}(MoO₄)_{d}.ZrₑSi_{f}O_{y}.F_{z} I
dans laquelle les variables possèdent les significations suivantes :
b de 0,8 à 1,5 ;
c de 0 à 0,3 ;
d de 0 à 0,3 ;
e de 0,01 à 0,3 ;
f de 0 à 0,3 ;
x (3/2 + 5b/2) ;
y (2e + 2f) ;
z 0,05 à 1,0.

2. Pigments de vanadate de bismuth selon la revendication 1, où f vaut zéro.

3. Pigments de vanadate de bismuth selon la revendication 1, où les variables possèdent les significations suivantes
b de 0,8 à 1,5 ;
c de 0,01 à 0,3 ;
d de 0,01 à 0,3 ;
e de 0,01 à 0,3 ;
f de 0,01 à 0,3 ;
x (3/2 + 5b/2) ;
y (2e + 2f) ;
z 0,05 à 1,0.

4. Pigments de vanadate de bismuth selon la revendication 1, où les variables possèdent les significations suivantes
b de 0,8 à 1,5 ;
c de 0 ;
d de 0 ;
e de 0,01 à 0,3 ;
f de 0 à 0,3 ;
x (3/2 + 5b/2) ;
y (2e + 2f) ;
z 0,05 à 1,0.

5. Pigments de vanadate de bismuth selon la revendication 1, où les variables possèdent les significations suivantes
b de 0,8 à 1,5 ;
c de 0 ;
d de 0 ;
e de 0,01 à 0,3 ;
f de 0 ;
x (3/2 + 5b/2) ;
y (2e + 2f) ;
z 0,05 à 1,0.

6. Pigments de vanadate de bismuth selon l'une des revendications 1 à 5, **caractérisés en ce que** les valeurs de luminosité L* se trouvent dans le domaine de 79 à 91.

7. Procédé pour la préparation de pigments de vanadate de bismuth selon l'une des revendications 1 à 6, **caractérisé en ce qu'**on traite un mélange aqueux renfermant des sels de bismuth, de vanadium et de zirconium, des sels de fluor, ainsi que, si on le souhaite, des sels des éléments pris dans le groupe comprenant le calcium, le molybdène et le silicium, pendant 2 à 30 heures dans un domaine du pH de 4,5 à 8.

8. Pigments de vanadate de bismuth que l'on peut obtenir selon le procédé selon la revendication 7.

9. Compositions renfermant des pigments selon l'une des revendications 1 à 6 ou 8, dont la surface est revêtue d'une matière de revêtement.

10. Composition renfermant
(a) de 75 à 97,5 % en poids de pigment de formule (I) selon l'une des revendications 1 à 6 ou 8 ou de la composition selon la revendication 9,
(b) de 0,5 à 10 % en poids d'agent de surface et
(c) de 0,5 à 25 % en poids d'agent anti-poussière, la somme des composant se complétant à 100 % en poids.

11. Utilisation des pigments selon l'une des revendications 1 à 6 ou 8 ou de la composition selon l'une des revendications 9 ou 10, pour la pigmentation de matière organique de haut poids moléculaire.
